# EUROPEAN PATENT APPLICATION

(11) **EP 2 505 448 A1**
(43) Date of publication of application: **03.10.2012**
(21) Application number: 12161122.2
(22) Date of filing: 23.03.2012
(51) Int. Cl.: B60W 40/13, G01G 19/08, B60W 50/00

(54) **On-board real-time weight prediction system by using CAN data bus**

(30) Priority: 28.03.2011 TR 201102920
(71) Applicant: Isbak Istanbul Ulasim Haberlesme Ve Guvenlik Teknolojileri Sanayi Ve Ticaret Anonim Sirketi, 80360 Istanbul (TR)
(72) Inventor: Uzun, Sadullah, 80360 ISTANBUL (TR)
(74) Representative: Iskender, Ibrahim

(57) **Abstract**

The present invention relates to on-board real-time weight prediction system by being used of CAN data bus, its property relates to be calculated of the vehicle's weight by taking the acceleration of vehicle and the torque created momentarily by the vehicle engine into consideration. According to the system subjected to the invention, the equipments performing the weight calculation gets the information to be used for calculation from the CAN BUS (SAE J1939) data bus, which is completely available at the original hardware of the vehicle and the algorithm working in the equipment predicts the weight of the vehicle by using these data and the initial calibration data.

## Description

This invention is related with on-board real-time weight prediction system using CAN data bus of vehicles. The main feature of the system is being able to calculate the weight by computing the acceleration and instant engine torque of the vehicle.

According to the system subjected to the invention, the equipment performing the weight calculation gets the information to be calculated from the CAN BUS (SAE J1939) data bus, which is completely available at the default hardware of the vehicle and the algorithm working in the equipment predicts the weight of the vehicle by using these data and the initial calibration data.

Currently, in the systems that are available and in use, to be settled of at least 4 pieces of load cells between the chassis of the vehicle and its load carrying cab is required in order to perform weight calculation for heavy tonnage vehicles or the calculation of weight is performed by settling and calibrating of pressure sensors to each suspension mechanism of the vehicles with air suspension. In the available systems, there are a number of expensive sensors and calibration and control equipment of these sensors.

In the available systems, the chassis of the vehicle and its load carrying cab must be removable in order to be settled of load cells between them or the suspension system of the vehicle must be air suspension. The costs of converting such vehicles, which are not providing these requirements, into these systems are very high. In addition, the application of the system with load cells to the vehicles, such as excavation trucks that are exposed to sudden loading, is quite difficult and brings extra costs.

In order to be overcome of the aforementioned problems and to be brought down of the costs, the system subjected to the invention that doesn't require an extra sensor for weighing process during weight measurement calculation has been developed.

The constant data (such as torque curve, speed gearbox, tyre size/diameter etc...) relates to the vehicle hardware has been previously installed to the equipment subjected to the invention. The data such as momentary vehicle speed and the engine speed are also read from the CAN BUS data bus. By means of the algorithm and/or the hardware of equipment in use, the inclination of the road is calculated and these parameters are sent as input to the developed algorithm, as a result to be predicted of the vehicle's weight is provided.

### The Advantages Obtained by the Invention:

The system subject of the invention takes out the requirement of being installed of any sensor for weight measurement, thus both the material and the assembly labour costs reduce, also the assembly period is shortened and the periodical calibration processes resulting from the wearing of sensors have been eliminated. The new system subject of the invention works with any vehicle without making vehicle distinction as it gets the required information from the CAN BUS (SAE J1939) data bus that is available at the original hardware of all vehicles manufactured after the year of 2004.

### The Explanation of the Invention:

The electronic control units (Electric Control Unit (ECU)) of the vehicles that have been manufactured after the year of 2004 are communicating by using the data bus called as CAN BUS (SAE J1939). When a new control unit is added to the vehicle, then the new ECU is mounted and calibrated as it will use the same data bus.

The different information formed in all ECUs and related to the working of vehicle is transmitted through this data bus. Among the transmitted data, there are information such as engine speed, torque produced by engine and the speed of vehicle.

In this system that will be provided, these data will be read during stand-up mode by connecting to the CAN data bus on the vehicle via the CAN controller that will be available on the equipment designed. The constant data related with the vehicle hardware will be previously installed to the equipment that will be developed. The constant data will be installed from a computer by means of a cabled or wireless another serial interface, which will be provided by the equipment, before the installation or during installation of the equipment to the vehicle.

The constant data that will be installed to the equipment are as follows:
- the curve of turning moment/torque
- gear ratios,
- engine efficiency coefficient,
- tyre size/diameter,
- the vehicle front surface area,
- Air friction coefficient.

This preliminary information will be provided by the manufacturer or will be determined through the measurements that will be performed on vehicle for every vehicle type and for one time only.

The momentarily information obtained from the CAN data bus and the constant data that were previously installed to the equipment will be used for predicting the total weight of the vehicle by the mathematical modelling (weight prediction algorithm) working in the microprocessor within the equipment whilst the vehicle is accelerating.

In addition to the constant data installed to the equipment and the momentarily information obtained from the CAN data bus for the prediction of the vehicle's weight, the inclination data of the road is also required. The inclination data of the road is either written to the mathematical model as parameter by calculating ratio of the impact of gravity acceleration to the vehicle as perpendicular to the road with the static accelerometer that is integrated to the vehicle or the mathematical model will predict the inclination of the road and the weight of vehicle as connected to the ratio of vehicle acceleration to the turning moment produced by engine.

As a result, the principal method of being predicted of vehicle's weight is based on being analyzed of the impact of turning moment produced by engine to the vehicle acceleration.

### Explanation of Figures:

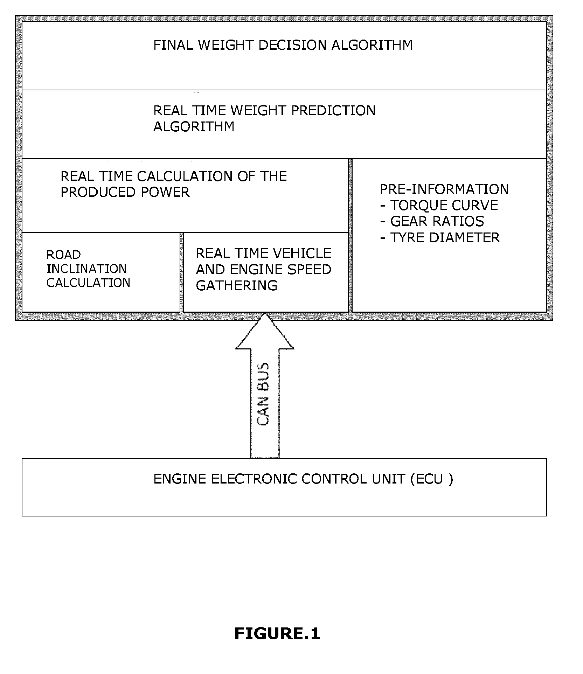

**Figure.1**: Block Diagram

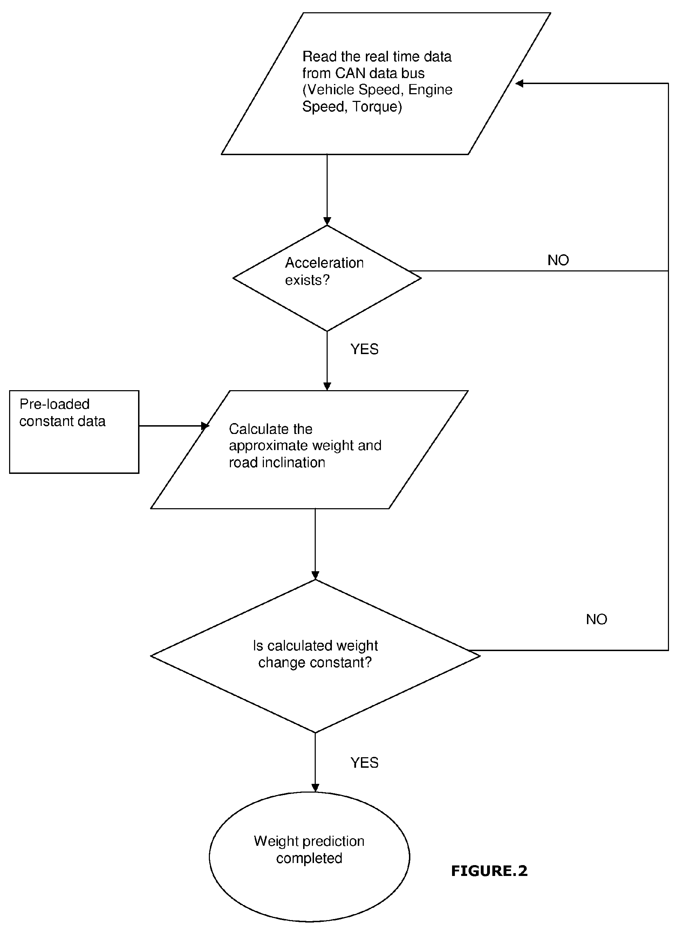

**Figure.2**: Work Flow Diagram

## Claims

1. On-board real-time weight prediction system by using CAN data bus, **characterized by** calculation of the vehicle's weight by means of constant calibration data installed to an equipment and the momentarily information such as the acceleration of vehicle and the torque produced momentarily by vehicle's engine that are obtained from CAN data bus available in the original hardware of the vehicle with the algorithm working within the equipment.

2. On-board real-time weight prediction system by using CAN data bus **characterized by** having CAN controller that is available on an equipment and providing to be read of data in the standing mode by being connected to the CAN data bus from where the information related with the working of vehicle are taken such as engine speed, torque produced by engine and the speed of vehicle that are formed in the electronic control units of vehicles.

3. On-board real-time weight prediction system by using CAN data bus mentioned in the Claim 1 and **characterized by** installing the vehicle's constant data such as turning moment curve, gear ratios, engine efficiency coefficient, tyre diameter, vehicle front surface area, air friction coefficient to the equipment from a computer by means of a cabled or wireless another serial interface, which will be provided by the equipment, before the installation or during installation of the equipment to the vehicle.

4. On-board real-time weight prediction system by using CAN data bus mentioned in the Claim 1 and **characterized by** using the constant data that were previously installed to the equipment and the momentarily information obtained from the CAN data bus for predicting the total weight of the vehicle by the mathematical modelling (weight prediction algorithm) working in the microprocessor within the equipment whilst the vehicle is accelerating.

5. On-board real-time weight prediction system by using CAN data bus mentioned in the Claim 1 and **characterized by** that the road inclination data required for the prediction of the vehicle's weight as well as the momentarily information obtained from the CAN data bus and the constant data installed to the equipment will be written to mathematical model as parameter by calculating ratio of the impact of gravity acceleration to the vehicle as perpendicular to the road with the static accelerometer that is integrated to the vehicle or the prediction of the road's inclination and the weight of vehicle as connected to the ratio of vehicle acceleration to the turning moment produced by engine during the same period by the mathematical model.
